Europäisches Patentamt

European Patent Office

Office européen des brevets

(11) Publication number : **0 479 738 A2**

# EUROPEAN PATENT APPLICATION

(21) Application number : **91830404.9**

(22) Date of filing : **30.09.91**

(51) Int. Cl.⁵ : **F16K 15/18**

(30) Priority : **02.10.90 IT 704790 U**

(43) Date of publication of application :
**08.04.92 Bulletin 92/15**

(84) Designated Contracting States :
**AT CH DE ES FR GB IT LI**

(71) Applicant : **SPALENZA F.LLI DOMENICO,
DANTE & C. S.n.c.
24 Via Don Luigi Sturzo
I-25065 Lumezzane S.S. (Brescia) (IT)**

(72) Inventor : **Spalenza, Modesto
24 Via Don Luigi Sturzo
I-25065 Lumezzane S.S. (Brescia) (IT)**

(74) Representative : **Manzoni, Alessandro
MANZONI & MANZONI - UFFICIO
INTERNAZIONALE BREVETTI P.le Arnaldo n.
2
I-25121 Brescia (IT)**

(54) **Tap for under-wash basin with nonreturn valve.**

(57)    The invention relates to an under-wash basin tap with a nonreturn valve incorporated, comprising a body with an inlet (F) for water coming from the network and a radial outlet (G) for water going towards a user device, a removable plug (11) screwed on and end of said body and a valvular shutter (16) slidable in said body with the double function of impeding the return of water towards the network and to automatically close the tap when the plug is removed.

Fig. 1

EP 0 479 738 A2

The present invention relates to safety taps for sanitary systems and more in particular to an under-wash basin with a nonreturn valve incorporated.

Realizations of under-wash basin taps of the type mentioned above able to automatically stop the flow of water once the inspection plug has been opened and also able to avoid any back-flow of the water, for any reason, from a user device towards the network are already known. Said taps are, however, relatively complex and can definitely be improve, to make them more functional and more economical.

It is the object of the present invention to supply an under-wash basin tap in which a new configuration, disposition and combination of its components assure a simpler and more practicable assembly, maximum reliability in its operating, advantageous reduction in the number of components and finally, equally advantageous, economical savings from a constructive point of view.

Another object of the present invention is to propose a tap used for the opening/closing of the flow of water through the valvular shutter by simply adjusting the inlet screw plug, in this way being used as a manoeuvring handle.

Said objects and advantages are carried out through an under-wash basin tap with a nonreturn valve incorporated, substantially in accordance with claim 1. Further details of the invention will appear clearer following the description with references being made to the attached drawings in which:

Fig. 1 is a longitudinal section of the tap assembled for normal flow of water;

Fig. 2 is similar to Fig. 1, but closed for the nonreturn of water;

Fig. 3 is a section of the tap closed following the removal of the inlet plug; and

Fig. 4 is a transversal section at the height of the shutter on the lines IV-IV in Fig. 1.

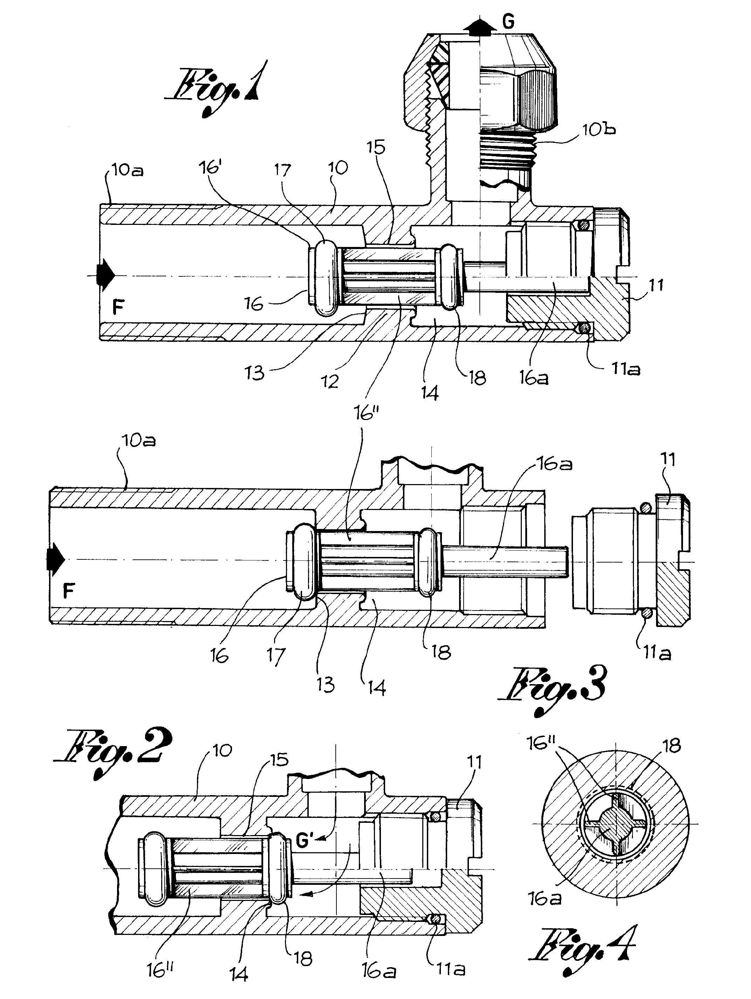

The here proposed under-wash basin tap comprises a tubular body (10) having a part (10a) which connects to the water line on the arrow (F) in Fig. 1 and a radial pipe fitting (10b) which connects a flow pipe to a user device on the arrow (G). The end of the body opposite the inlet (10a) is closed by a screw plug (11) having a seal (11a) and is removable by unscrewing so as to get through to the body.

A neck (12) having opposite sides with two valves seats (13, 14) is formed inside the body (10) in an intermediate position between the inlet (10a) and the radial pipe fitting (10b). The neck (12) also has an axial hole (15) in which a valvular shutter (16) is placed and slides, sais shutter working as both a nonreturn valve and a security valve when the end plug (11) is loosened or removed.

There are separate peripherical seals (17, 18) on opposite sides of the neck (12) of the shutter (16). Said seals (17, 18) are designated to respectively rest against the valve seats (13, 14) when axially moving the shutter as will be later described. The shutter has an anti-extracting part (16′) on at least the end of the seal (13) facing the inlet. The shutter has a smaller section being either cross-shaped, star-shaped or similar (Fig. 4) between the two seals (13, 14) to define longitudinal grooves (16″) which allow for the flow of water from one end to the other of the neck (12) through the hole (15) on the arrow (F).

Finally, the shutter (16) has an extension stem (16a) which extends towards the end tap (11) to interact with it.

When the tap is in normal use, the plug (11), being closed, works against the stem (16a) of the shutter (16), keeping it in an intermediate position in which both the seals (17, 18) are spaced by their respective seats (13, 14). An example of the above is represented in Fig. 1 of the drawing and allows for a normal delivery of the water on the arrows (F, G).

Starting from this position, should there for any reason be a lack or decrease in pressure upstream of the shutter with respect to that downstream, that is to say on the side of the pipe fitting (10b), the shutter will automatically move (on the arrow G) until its seal (18) comes to rest against the valve seat (14) (Fig. 2), thus impeding the back flow of water towards the water supply network.

When the plug (11) is removed, the shutter (16), pushed by the delivered water, is moved until it comes to rest with its seal (17) against the valve seat (Fig. 3) closing the valve, thus impeding the outlet of any water.

It should finally be noted that, should the plug (11) be fitted with gripping parts in order to manoeuvre it and control its screwing and unscrewing, it can also be used as a tap through manual operating of the shutter without stopping it working as a nonreturn valve.

## Claims

1. An under-wash basin tap with a nonreturn valve incorporated, comprising a body with an inlet (F) for water coming from the network and a radial outlet (G) for water going towards a user device, a removable plug (11) screwed on an end of said body and a valvular shutter (16) slidable in said body with the double function of impeding the return of water towards the network and to automatically close the tap when the plug is removed, characterized in that a neck (12) is formed in said body where said neck (12) delimits a communicating axial hole (15) between the inlet and outlet and, with its sides, delimits two valve seats (13, 14), in that the valvular shutter (16) rests and is slidable in said axial hole (15) ans has two peripherical seals (17, 18) which respectively interact with said valve seats in dependence of the movements of the shutter following the pressure of water upstream and/or downstream of the shutter and in that the shutter has an extendable stem (16a) which interacts with the plug to normally keep the shutter in a position to keep both valve seats open and to allow the automatic movement of the shutter in a closed position when the plug is removed.

2) A tap as claimed in claim 1, characterized in that said shutter has an anti-extraction part (16′) at least on the side facing the inlet and a tapered or shaped part (16″) between the two seals (17, 18).

3) A tap as claimed in claims 1 and 2, characterized in that the plug (11) has gripping and manoeuvring parts for the limited unscrewing of the plug itself and a manual opening/closing of the shutter in the same way as a manual tap.

Fig.1

Fig.2

Fig.3

Fig.4